(19) Europäisches Patentamt
European Patent Office
Office européen des brevets

(11) **EP 3 413 456 B1**

(12) **EUROPEAN PATENT SPECIFICATION**

(45) Date of publication and mention
of the grant of the patent:
**23.09.2020 Bulletin 2020/39**

(51) Int Cl.:
***H02M 7/49*** *(2007.01)*    ***H02M 7/48*** *(2007.01)*
***H02M 7/483*** *(2007.01)*

(21) Application number: **17747305.5**

(22) Date of filing: **26.01.2017**

(86) International application number:
**PCT/JP2017/002725**

(87) International publication number:
**WO 2017/135147 (10.08.2017 Gazette 2017/32)**

(54) **POWER CONVERSION DEVICE**

STROMWANDLUNGSVORRICHTUNG

DISPOSITIF DE CONVERSION DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2016 JP 2016019431**

(43) Date of publication of application:
**12.12.2018 Bulletin 2018/50**

(73) Proprietors:
• **Kabushiki Kaisha Toshiba
Minato-ku
Tokyo 105-8001 (JP)**
• **Toshiba Energy Systems & Solutions
Corporation
Saiwai-ku
Kawasaki-shi
Kanagawa 2120013 (JP)**

(72) Inventors:
• **HASEGAWA, Ryuta
Tokyo 105-8001 (JP)**
• **SUZUKI, Daichi
Tokyo 105-8001 (JP)**
• **FUJITA, Takashi
Tokyo 105-8001 (JP)**

(74) Representative: **AWA Sweden AB
Junkersgatan 1
582 35 Linköping (SE)**

(56) References cited:
**EP-A1- 2 975 749        EP-A1- 3 188 356
JP-A- 2012 044 839      JP-A- 2014 108 000
JP-A- 2015 146 692      US-A1- 2014 092 661
US-A1- 2015 062 991**

EP 3 413 456 B1

**Description**

FIELD

Embodiments of the present disclosure relates to a power conversion device which is installed between a DC power supply and an AC power system, and which mutually converts AC and DC.

BACKGROUND

In recent years, the popularization of renewable energies, such as wind power generation, solar power generation and solar thermal power generation, are advancing, and to supply larger power by renewable energy, offshore wind power generation, and solar power generation and solar thermal power generation in desert regions are starting to be considered. In the case of the offshore wind power generation, it is required to high-power-transmit the generated power to cities that are power consumption site via a submarine cable, or to transmit large amount of power in high efficiency from the desert regions in Africa and in inner China to large cities in Europe or in coastal regions for a long distance. As for such a requirement, a DC power transmission is more efficient than conventional three-phase AC power transmission, and since an installation of the system while suppressing costs is enabled, a construction of the DC power transmission network is starting to be considered.

In the DC power transmission, power conversion devices, such as a converter that converts generated AC power into DC power for DC power transmission, and an inverter that converts the transmitted DC power into AC power for cities, are necessary. Currently, a power conversion device which is capable of outputting a voltage waveform close to a sine wave so as to prevent harmonic wave by the switching of the converter and the inverter from flowing out to the AC system, and which can reduce output filters is in practice. This power conversion device is called a MMC (Modular Multilevel Converter).

The MMC is installed between a DC power supply and an AC power system, and includes phase arms in three phases. The phase arms in the three phases include chopper cells connected in series. The phase arms in the three phases are connected in parallel, and are each always connected to the DC power supply. Each phase arm is divided into an upper arm and a lower arm, that is, chopper cell group connected in series is divided into two groups, and an output terminal to the AC power system is provided between the upper arm and the lower arm.

The MMC needs a correction of voltage imbalance among the arms in the three phases, between the upper arm and the lower arm, and among the chopper cells, etc., caused by the variability in operating status and in components. Hence, in the conventional MMCs, various schemes to correct the voltage imbalance have been proposed. For example, the voltage imbalance between the upper arm and the lower arm can be corrected by causing a circulating current to flow in each of the three phases, and by controlling the circulating current.

More specifically, the voltage difference between the upper arm and the lower arm is divided into a zero-phase component, a normal-phase component, and a reverse-phase component, and the respective voltage differences are corrected by controlling three kinds of circulating currents. Since the three phases are always connected in parallel, the MMC can have three kinds of circulating currents flown by such three kinds of current paths, and the correction of voltage difference between the upper arm and the lower arm is facilitated by distributing the three kinds of the circulating currents for zero-phase voltage difference correction, normal-phase voltage difference correction, and reverse-phase voltage difference correction.

However, in MMC, power pulsation equivalent to the output AC frequency occurs in the capacitor of the chopper cell. To suppress the change in capacitor voltage to be equal to or smaller than a certain value, it is required to increase the capacity of the capacitor. In the case of the DC power transmission in which the DC voltage reaches several ten kV to several hundred kV, the number of chopper cells is large, and the capacitor volume increases in proportional to such a number.

Hence, in recent years, a neutral-point clamp type modular multilevel converter (NPC-MMC) that is a combination of a valve having multiple self excitation switches such as IGBTs, etc. connected in series and the chopper cell has been proposed. This power conversion device has the switch connected to the both ends of the phase arm in each of the three phases, and has the phase arms in three phases each connected to the DC power supply via the switch. Moreover, two switches are connected in series between the switches at both ends, and these two switches are connected in parallel with the phase arm. Furthermore, a neutral-point is provided between the two switches, and the neutral-points in respective phases are connected.

According to this power conversion device, one phase is connected to the other two phases in series, the other two phases are connected in parallel, and the arms in three phases having such a connection relation are connected to the DC power supply by on-off operation of each switch. According to this power conversion device, the voltage of the DC power supply may be balanced by the total voltage of the arms in the two phases. Hence, in comparison with the conventional MMCs that needs to balance the voltage of the DC power supply and the voltage of the arm in each phase, the power conversion device that is called an NPC-MMC can have half the number of chopper cells, reduce the installation space for the device, reduce the switching loss, and improve the conversion efficiency.

EP 3 188 356 A1 discloses a power converter between AC and DC capable of keeping the neutral potential constant. US 2015/062991 A1, US 2014/092661 A1 and EP 2 975 749 A1 are prior art literature disclosing conventional multilevel power converters.

CITATION LIST

PATENT LITERATURES

Patent Literature 1: JP 2010-512134 A

Non-Patent Literature 1: Year 2014, Institute of Electrical Engineers of Japan, Industry Applications Society Conference Program, 1-155: neutral-point clamp type modular multilevel Converter

SUMMARY

The power conversion device called an NPC-MMC can create only one path for the circulating current that passes through the positive side of the DC power supply and the negative side thereof. The path of the circulating current only has a path that has an input from the single phase and has an output from the parallel two phases, or a current path that has an input from the parallel two phases and has an output from the single phase. Hence, conventional MMC schemes of addressing the respective voltage differences in zero-phase component, normal-phase component, and reverse-phase component by the three kinds of circulating currents are not applicable. That is, in the power conversion device called an NPC-MMC, a scheme of controlling various voltage balances has not yet been established.

The invention is defined by the appended independent claim. Embodiments are set forth in the appended dependent claims and in the following description and drawings.

Accordingly, the objective of embodiments of the present disclosure are to provide a power conversion device called an NPC-MMC which is capable of controlling a capacitor voltage balance among chopper cells.

In order to achieve the above objective, a power conversion device according to an embodiment is provided between a DC power supply and an AC power system, and mutually converts AC and DC, and the power conversion device includes:

respective phase arms in three phases each including a plurality of chopper cells connected in series;
an upper arm and a lower arm formed by dividing the chopper cells in the phase arm into two;
an output terminal provided between the upper arm and the lower arm, and connected to the AC power system;
a first switch and a fourth switch provided at both ends of the phase arm, and provided between the phase arm and the DC power supply;
a second switch and a third switch connected in series between the first switch and the fourth switch, and connected in parallel with the phase arm;
respective neutral-points in the three phases provided between the second switch and the third switch, and connected with each other; and
a controller controlling the chopper cells and the first to fourth switches, in which the controller:

controls the first to fourth switches to form, in each voltage phase, each combination circuit in which each of the phase arms in the two phases are connected in parallel, and the phase arm in the other one phase is connected in series to the phase arms connected in parallel;
controls the chopper cells to superimpose an AC current on a P-N circulating current that circulates between a positive side of the DC power supply and a negative side thereof via the combination circuit; and
controls the AC current to suppress an imbalance in a voltage difference between the upper arm and the lower arm;
wherein the controller superimposes two kinds of the AC current with different frequencies, and as for the imbalance that is the voltage difference between the upper arm and the lower arm, suppresses a normal-phase component and a reverse-phase component by the one AC current and suppresses a zero-phase component by the other AC current

BRIEF DESCRIPTION OF DRAWINGS

FIG. 1 is a structural diagram of a power conversion device according to an embodiment;

FIG. 2 is a structural diagram of a chopper cell of the power conversion device;

FIGS. 3(a) and 3(b) are each a schematic diagram illustrating an example connection relation in each phase, and a flowing current, in the power conversion device;

FIG. 4 is a table illustrating the connection relation in each phase for each power phase;

FIG. 5 is a control block diagram of the power conversion device;

FIG. 6 is a control block diagram of a voltage control that causes a voltage difference normal-phase component between an upper arm and a lower arm to be zero;

FIG. 7 is a control block diagram of the voltage control that causes the zero-phase difference zero-phase component between the upper arm and the lower arm to be zero;

FIG. 8 is a control block diagram relating to a DC component of a P-N circulating current;

FIG. 9 is a control block diagram illustrating a calculating procedure of the P-N circulating current;

FIGS. 10 (a) to 10 (c) are each a control block diagram illustrating a first example of an inter-phase balance control;

FIGS. 11 (a) to 11 (c) are each a control block diagram illustrating another example of the inter-phase balance control;

FIG. 12 is a control block diagram for making the average values of the capacitor voltage of all chopper cells constant;

FIG. 13 is a control block diagram for calculating a voltage command value for the upper and lower arms in each phase;

FIG. 14 is a control block diagram for calculating the voltage command value for each chopper cell;

FIG. 15 is a graph illustrating a calculation method of a command value of the output voltage by the chopper cell; and

FIG. 16 is a graph for explaining a voltage output method by the chopper cell.

## DETAILED DESCRIPTION

(Structure)

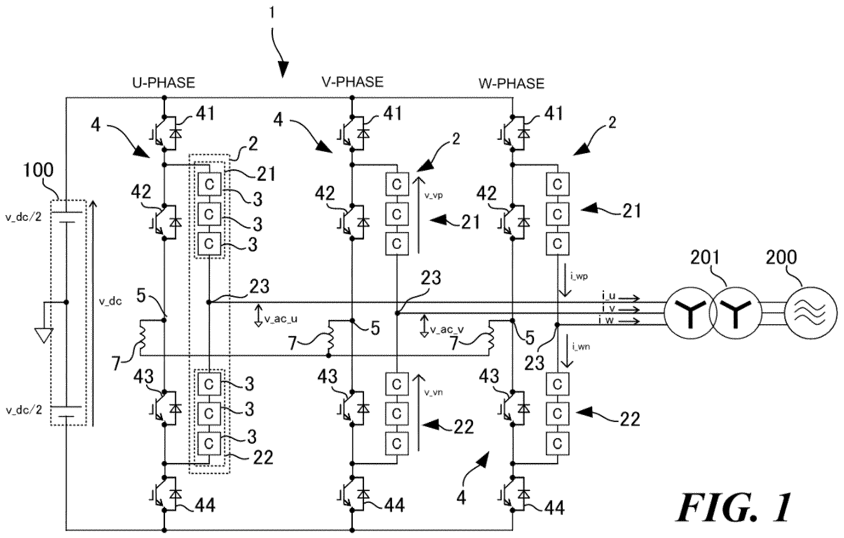

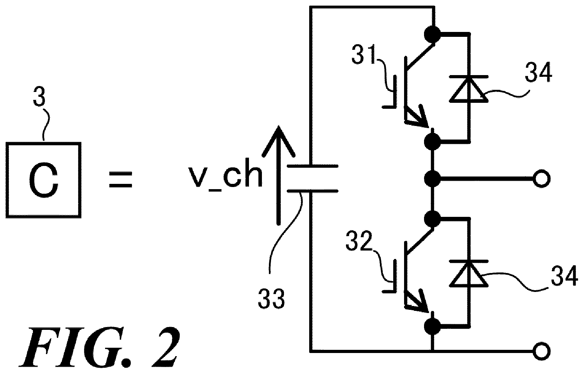

A power conversion device according to this embodiment will be described in detail with reference to the figures. FIG. 1 is a structural diagram of the power conversion device according to this embodiment. FIG. 2 is a structural diagram of a chopper cell of the power conversion device. The power conversion device 1 is a neutral-point clamp type modular multilevel converter (NPC-MMC) of a high-voltage DC power transmission system. This power conversion device 1 is installed between a DC power supply 100 and an AC power system 200. This power conversion device 1 converts an input DC voltage $v\_dc$ of the DC power supply 100 to AC voltages $v\_ac$ in three phases, and outputs AC power to the AC power system 200 via a three-phase transformer 201. In this embodiment, a reference potential is defined as the mid point of the input DC voltage $v\_dc$.

This power conversion device 1 includes phase arms 2 that generate respective AC voltages $v\_ac$ in the U-phase, the V-phase, and the W-phase. Each phase arm 2 has both ends connected to a first switch 41 and a fourth switch 44, respectively, and is connected to the DC power supply 100 via the first switch 41 and the fourth switch 44. Each phase arm 2 is formed by connecting a plurality of chopper cells 3 in series.

As illustrated in FIG. 2, the chopper cell 3 is formed by connecting in parallel a leg that has a switch 31 and a switch 32 connected in series, and a DC capacitor 33. The switches 31 and 32 are reverse conducting switches, and each of the switches 31 and 32 includes a switching element and a freewheel diode 34 connected in reverse parallel therewith are formed by connecting in reverse parallel each of the switching elements of the switches 31 and 31, and feedback diodes. An example switching element is an IGBT, a MOSFET, etc., that flows a current in one direction when turned ON, and has a self extinction capability.

In each phase arm 2, the chopper cell 3 is divided into an upper arm 21 and a lower arm 22. The upper arm 21 is a group of the chopper cells 3 connected to the positive side with respect to the DC power supply 100. The lower arm 22 is a group of the chopper cells 3 connected to the negative side with respect to the DC power supply 100. The phase arm 2 includes an output terminal 23 between the upper arm 21 and the lower arm 22, and outputs AC power to the AC power system 200 from the output terminal 23 via the three-phase transformer 201.

The phase arm 2 that includes the upper arm 21 and the lower arm 22 converts DC voltage into stepwise AC voltage $v\_ac$ with the chopper cell 3 being a unit converter, and outputs such a voltage to the AC power system 200 from the output terminal 23. The number of the chopper cells 3 in each phase arm 2 is determined in accordance with the input DC voltage $v\_dc$ and a capacitor voltage $v\_ch$ of the chopper cell, and is substantially $(v\_dc/2)/v\_ch$. In this embodiment, the number of the chopper cells 3 is designed as three.

Moreover, the power conversion device 1 further includes, in each phase, a valve 4 that has the first switch 41 and the fourth switch 44 as components. The valve 4 includes, in addition to the first switch 41 and the fourth switch 44, a second switch 42 and a third switch 43, and these first to fourth switches 41 to 44 are connected in series. The second switch 42 and the third switch 43 are connected in series between the first switch 41 and the fourth switch 44, and are connected in parallel with the phase arm 2. This valve 4 changes the connection relation of each phase arm 2 for every voltage phase angle that is 60 degrees by turning ON and OFF the first to fourth switches 41 to 44.

The first to fourth switches 41, 42, 43, and 44 are each a reverse conducting switch, and are formed by connecting in reverse parallel the switching element and a feedback diode 34. An example switching element is an IGBT, a MOSFET, etc., that flows a current in one direction when turned ON, and has a self extinction capability.

The first to fourth switches 41, 42, 43, and 44 has a withstand voltage determined by the input DC voltage v_dc of the DC power supply 100. The switching element applied to the input DC voltage v_dc is selected by considering a superimposing of a surge voltage at the time of switching operation on the voltage that is v_dc/2. When the DC voltage v_dc is equal to or larger than several ten kV, it is difficult to accomplish the withstand voltage by a single switching element, and it is necessary to connect a plurality of switching elements in series. Although there is one switching element for one switch in this embodiment, one switch may include a plurality of switching elements connected in series.

Regarding the directions of the first switch 41 and the fourth switch 44, the first switch 41 has a collector connected to the positive side of the DC power supply 100, and has an emitter connected to the collector of the upper arm 21. The fourth switch 44 has an emitter connected to the negative side of the DC power supply 100, and has a collector connected to the emitter of the lower arm 22. Regarding directions of the second switch 42 and the third switch 43, the collector of the second switch 42 is connected to the emitter of the first switch 41 that is connected to the upper arm 21, and the emitter of the third switch 43 is connected to the collector of the fourth switch 44 that is connected to the lower arm 22.

A neutral-point 5 is provided between the second switch 42 and the third switch 43 in the U-phase, a neutral-point 5 is provided between the second switch 42 and the third switch 43 in the V-phase, a neutral-point 5 is provided between the second switch 42 and the third switch 43 in the W-phase, and the neutral-points 5 in respective phases that are the U-phase, the V-phase, and the W-phase are connected with each other.

(Control)

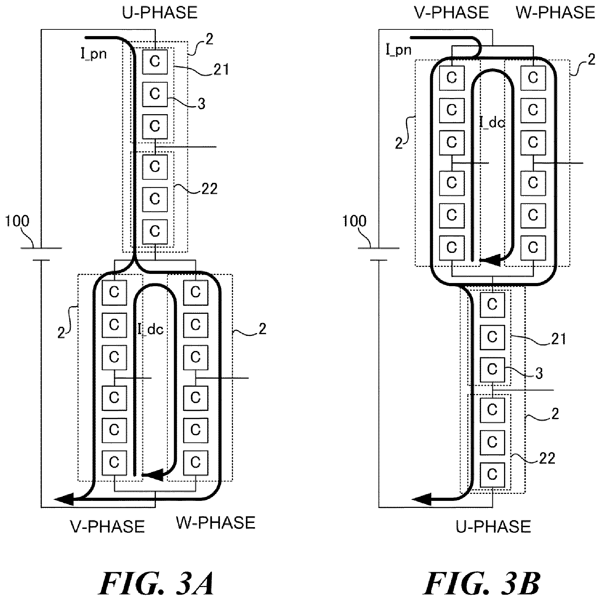

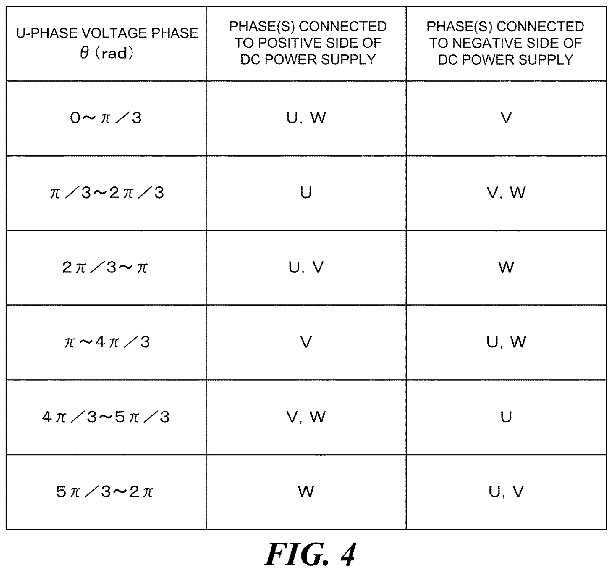

As illustrated in FIGS. 3 (a) and 3 (b), in this power conversion device 1, for each voltage phase of 60 degrees, in various combinations, one phase and the other two phases are connected in series, the other two phases are connected in parallel, and the parallel two phases and the one phase are interchanged to the positive side or the negative side. For example, as illustrated in FIG. 3 (a) and FIG. 4, when the voltage phase in the U-phase is $\pi/3$ to $2\pi/3$, the phase arms 2 in the V-phase and the W-phase are connected in parallel, the phase arms 2 connected in parallel are connected in series to the phase arm 2 in the U-phase, the phase arms 2 in the V-phase and the W-phase are connected to the negative side of the DC power supply 100, and the phase arm 2 in the U-phase is connected to the positive side of the DC power supply 100.

The circuit with such a connection configuration is achieved by the following ON and OFF switching in the valve 4. That is, the first switch 41 and the third switch 43 in the U-phase are turned ON, the second switch 42 and the fourth switch 44 in the V-phase are turned ON, and the second switch 42 and the fourth switch 44 in the W-phase are turned ON.

Moreover, as illustrated in FIG. 3(b) and FIG. 4, when, for example, when the voltage phase in the U-phase is $4\pi/3$ to $5\pi/3$, the phase arms 2 in the V-phase and in the W-phase are connected in parallel with the DC power supply 100, the phase arms 2 connected in parallel are connected in series to the phase arm 2 in the U-phase, the phase arms 2 in the V-phase and in the W-phase are connected to the positive side of the DC power supply 100, and the phase arm 2 in the U-phase is connected to the negative side of the DC power supply 100.

The circuit with such a connection configuration is achieved by the following ON and OFF switching in the valve 4. That is, in the valve 4, the first switch 41 and the third switch 43 in the V-phase are turned ON, the first switch 41 and the third switch 43 in the W-phase are turned ON, and the second switch 42 and the fourth switch 44 in the U-phase are turned ON.

When the power conversion device 1 is operated as described above, and for example when an output AC voltage v_ac_u in the U-phase is positive, and an output AC voltage v_ac_v in the V-phase is negative, a voltage that is a total of a capacitor voltage v_up+v_un of the phase arm 2 in the U-phase and a capacitor voltage v_vp+v_vn of the phase arm 2 in the V-phase is short-circuited with the input DC voltage v_dc via the first switch 41 and the third switch 43 in the U-phase, and the second switch 42 and the fourth switch 44 in the V-phase. Hence, the phase arms 2 are connected via buffer reactors 7 provided between the respective neutral-points 5, and suppress a current increase at the time of short-circuit.

In this power conversion device 1, as illustrated in FIGS. 3(a) and 3(b), a P-N circulating current flows between the DC power supply 100 and the power conversion device 1. The P-N circulating current is a current that flows in a circuit formed in the power conversion device 1 from the positive side of the DC power supply 100 to the negative side thereof. Moreover, an inter-phase circulating current flows between the phase arms 2 in the two phases connected in parallel. The inter-phase circulating DC current is a current that circulates in the phase arms 2 in the two phases connected in parallel.

(Voltage Control)

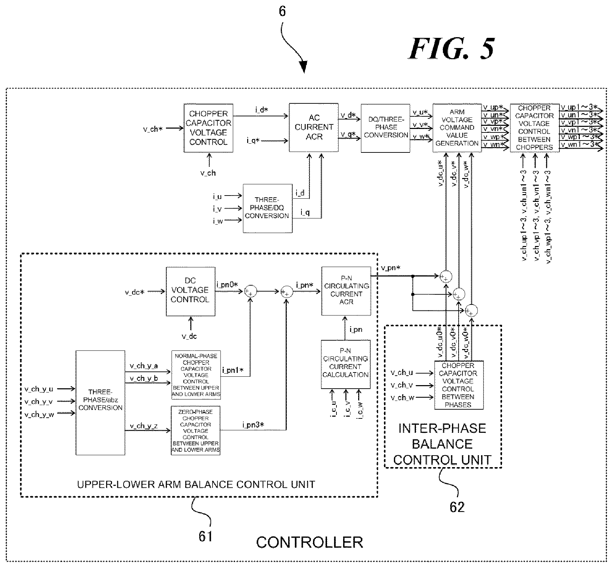

The control method by this power conversion device 1 will be described. As illustrated in FIG. 5, the power conversion device 1 includes a controller 6 that controls the chopper cells 3 in each phase arm 2 and the first to the fourth switches 41, 42, 43, and 44 in each phase. The controller 6 is a so-called computer or a special-purpose electric circuit that executes calculation and control in accordance with a program.

For example, in the controller 6, a CPU executes calculation in accordance with the program stored in a ROM, and a drive circuit for the chopper cells 3 in each phase arm 2 and the first to the fourth switches 41, 42, 43, and 44 in each phase transmits a gate signal in accordance with a calculation result. Values of the current and the voltage detected at each upper arm 21 and lower arm 22 by unillustrated current detector and voltage detector are input to this controller 6, a calculation is executed with the current value and the voltage value being parameters, and a calculation result is utilized for voltage control.

This controller 6 includes an upper-lower arm balance control unit 61 and an inter-phase balance control unit 62. The upper-lower arm balance control unit 61 flows the P-N circulating current on which AC currents of two kinds of frequencies are superimposed, and causes the voltage of the upper arm 21 and that of the lower arm 22 to be consistent by controlling such a P-N circulating current on which the AC currents are superimposed. Since the AC currents superimposed on the P-N circulating current are sufficiently small relative to the DC component and the power based on this AC current is Ipn·sin(ωt-e) xv_dc, the AC currents per a cycle is zero and does not affect the power transmission. Moreover, the inter-phase balance control unit 62 operates the DC inter-phase circulating current, causing the voltages between the phases to be consistent with each other.

(Upper-Lower Arm Balance Control)

As illustrated in FIG. 5, this upper-lower arm balance control unit 61 divides the voltage imbalance between the upper arm 21 and the lower arm 22 into a set of normal-phase component and reverse-phase component (hereinafter, simply and representatively referred to as the normal-phase component), and a zero-phase component, and addresses the imbalance by causing the normal-phase component and the zero-phase component to be zero, respectively, by the AC currents of two kinds of frequencies. Moreover, the upper-lower arm balance control unit 61 that controls the P-N circulating current calculates a DC component command value i_pn0* to make the DC component of the P-N circulating current constant.

The upper-lower arm balance control unit 61 calculates a singular frequency component command value i_pn1* for causing a voltage difference normal-phase component to be zero. The singular frequency component command value i_pn1* is a command value for the AC component of the P-N circulating current corresponding to a single frequency of the output AC voltage v_ac to be output to the AC power system 200.

Moreover, the upper-lower arm balance control unit 61 calculates triple frequency component command value i_pn3* for causing a voltage difference zero-phase component to be zero. The triple frequency component command value i_pn3* is the AC component of the P-N circulating current corresponding to the three-times frequency of the output AC voltage to v_ac 3 to be output to the AC power system 200.

The upper-lower arm balance control unit 61 adds the DC component command value i_pn0*, the singular frequency component command value i_pn1*, and the triple frequency component i_pn3* to calculate the P-N circulating current command value i_pn*. Moreover, the upper-lower arm balance control unit 61 calculates a P-N circulating current i_pn, and executes proportional integral control that causes the P-N circulating current i_pn to follow the P-N circulating current command value i_pn* to acquire a P-N voltage command value v_pn*. The P-N voltage command value v_pn* is a command value for the voltage from the positive-side end of the power conversion device 1 to the negative-side end thereof.

In this case, at the time of the calculation of the singular frequency component command value i_pn1* and the triple frequency component command value i_pn3*, the upper-lower arm balance control unit 61 utilizes voltage difference normal-phase components v_ch_y_a and v_ch_y_b between the upper arm 21 and the lower arm 22 and the voltage difference zero-phase component v_ch_y_z as parameters.

This upper-lower arm balance control unit 61 subtracts the average value of the capacitor voltage of the upper arm 21 from the average value of the capacitor voltage of the lower arm 22, calculates the voltage difference between the upper arm 21 and the lower arm 22, and executes three-phase/abz conversion on the voltage differences v_ch_y_u, v_ch_y_v, and v_ch_y_w in the respective phases, thereby acquiring the voltage difference normal-phase components v_ch_y_a and v_ch_y_b between the upper arm 21 and the lower arm 22, and the voltage difference zero-phase component v_ch_y_z . For example, in the U-phase, the voltage difference v_ch_y_u between the upper arm 21 and the lower arm 22 subtracts an average value v_ch_up of the capacitor voltage of the upper arm 21 from an average value v_ch_un of the capacitor voltage of the lower arm 22.

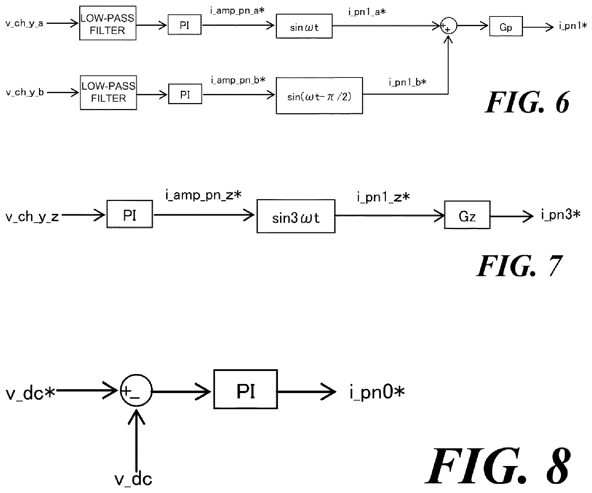

FIG. 6 is a control block diagram of the voltage control that causes the voltage difference normal-phase component between the upper arm 21 and the lower arm 22 to be zero after the three-phase/abz conversion. As illustrated in FIG. 6, the upper-lower arm balance control unit 61 causes the voltage difference normal-phase components v_ch_y_a and v_ch_y_b between the upper arm 21 and the lower arm 22 to pass through a low-pass filter. The low-pass filter eliminates pulsation of the output AC voltage frequency theoretically superimposed on the voltage difference normal-phase components v_ch_y_a and v_ch_y_b between the upper arm 21 and the lower arm 22, that is, a ripple voltage component. Although a moving-average filter or a primary delay filter, etc., is applicable as the low-pass filter, it is desirable that a time constant is designed so that the AC voltage frequency component becomes sufficiently small.

The upper-lower arm balance control unit 61 executes respective PI controls to cause the voltage difference normal-phase components v_ch_y_a and v_ch_y_b that have passed through the low-pass filter to be zero, to acquire an amplitude command value i_amp_pn_a* of the P-N circulating current in an a-phase and an amplitude command value i_amp_pn_b* for the P-N circulating current in a b-phase. Next, the upper-lower arm balance control unit 61 multiplies, by the sine function of the output AC voltage, the amplitude command value i_amp_pn_a* for the P-N circulating current in the a-phase and the amplitude command value i_amp_pn_b* for the P-N circulating current in the b-phase, to acquire a command value i_pn1_a* for the P-N circulating current in the a-phase and a command value i_pn1_b* for the P-N circulating current in the b-phase.

Note that, the sine function is $\sin\omega t$ for the amplitude command value i_amp_pn_a* for the P-N circulating current in the a-phase, and is sin ($\omega t-\pi/2$) for the amplitude command value i_amp_pn_b* for the P-N circulating current in the b-phase, to the phases in the a-phase and in the b-phase. Moreover, although the sine function is the singular frequency of the output AC voltage as an example, it may be 6N±1 multiples (where N is a natural number). That is, it is appropriate if an AC 6N±1 times frequency component i_pn1 of the P-N circulating current is controllable to cause the normal-phase voltage difference to be zero.

Next, the upper-lower arm balance control unit 61 adds the command value i_pnl_a* for the P-N circulating current in the a-phase, and the command value i_pn1_b* for the P-N circulating current in the b-phase, and multiplies the addition result by a gain Gp, to calculate the command value i_pn1* for the singular frequency component for the P-N circulating current. The gain Gp is a coefficient that adjusts a control response.

For example, it is desirable that, for this gain Gp, a modulation factor M is considered to maintain the control response unchanged even if the modulation factor M of the output AC voltage v_ac changes. The modulation factor M of the output AC voltage v_ac is a ratio of an amplitude value v_amp of the output AC voltage v_ac relative to the DC voltage v_dc. This gain Gp is calculated by the following formula (1) .

$$Gp = \frac{1}{\left(\frac{4}{3}+\frac{\sqrt{3}}{2\pi}\right)M - \frac{6}{2\pi}} \qquad \cdots (1)$$

Note that, when a change in control response is allowable, it is unnecessary to change the gain Gp in accordance with the modular factor M, but the sign of the gain Gp follows the sign of the right-side denominator of the above formula (1). That is, it is necessary to set the gain Gp as the following formula (2).

$$Gp = sign\left\{\left(\frac{4}{3}+\frac{\sqrt{3}}{2\pi}\right)M - \frac{6}{2\pi}\right\} \qquad \cdots (2)$$

FIG. 7 is a control block diagram of the voltage control that causes the voltage difference zero-phase component between the upper arm 21 and the lower arm 22 to be zero after the three-phase/abz conversion. As illustrated in FIG. 7, the upper-lower arm balance control unit 61 executes the PI control to cause the voltage difference zero-phase component v_ch_y_z between the upper arm 21 and the lower arm 22 to be zero, to acquire an amplitude command value i_amp_pn_z* for the P-N circulating current in the zero-phase. Next, the upper-lower arm balance control unit 61 multiplies the amplitude command value i_amp_pn_z* for the P-N circulating current in the zero-phase by the sine function that has the triple frequency of the output AC voltage frequency, to acquire a command value i_pn1_z* for the P-N circulating current in the zero-phase.

Although the sine function in the example is the triple frequency of the output AC voltage frequency, it may be 3×(2N-1) times (where N is natural number). That is, it is appropriate if 3×(2N-1) times AC frequency component of the P-N circulating current is controllable to cause the zero-phase voltage difference to be zero.

Next, the upper-lower arm balance control unit 61 multiples the command value i_pn1_z* of the P-N circulating current in the zero-phase by a gain Gz, to calculate the command value i_pn3* for the triple frequency component of the P-N circulating current. It is desirable that, for the gain Gz, the modulation factor M is considered to maintain the control response unchanged even if the modulation factor M of the output AC voltage changes . This gain Gz is calculated from the following formula (3).

$$Gz = \cfrac{1}{-\cfrac{3\sqrt{3}}{4\pi}M + \cfrac{1}{6\pi}} \qquad \cdots (3)$$

When a change in control response is allowable, it is unnecessary to change the gain Gz in accordance with the modular factor M, but the sign of the gain Gz follows the sign of the right-side denominator of the above formula (3). That is, it is necessary to set the gain Gz as the following formula (4) .

$$Gz = sign\left( -\frac{3\sqrt{3}}{4\pi}M + \frac{1}{6\pi} \right) \qquad \cdots (4)$$

FIG. 8 is a detailed control block diagram of the DC component of the P-N circulating current. As illustrated in FIG. 8, the upper-lower arm balance control unit 61 executes the PI control to cause the difference between the DC voltage command value v_dc* and the DC voltage v_dc to be zero, to calculate a DC component command value i_pn0* for the P-N circulating current.

The upper-lower arm balance control unit 61 adds the DC component command value i_pn0* for the P-N circulating current, the AC singular frequency component command value i_pn1*, and the AC triple frequency component command value i_pn3*, to calculate the command value i_pn* for the P-N circulating current. Next, the upper-lower arm balance control unit 61 calculates the P-N circulating current i pn, and executes the PI control to cause the P-N circulating current i_pn to follow the command value i_pn* for the P-N circulating current, to acquire a P-N voltage command value v_pn*.

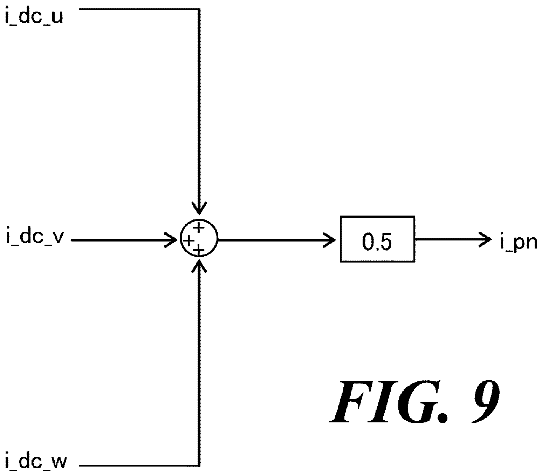

As illustrated in FIG. 9, the P-N circulating current i_pn is calculated by adding currents i_dc_u, i_dc_v, and i_dc_w of the respective phase arms 2, and further multiplying the addition result by 0.5. The current i_dc_u of the phase arm 2 in the U-phase is calculated by adding a current i_u_n of the lower arm 22 and a current i_u_p of the upper arm 21, and further multiplying the addition result by 0.5. The current i_dc_v of the phase arm 2 in the V-phase is calculated by adding a current i_v_n of the lower arm 22 and a current i_v_p of the upper arm 21, and further multiplying the addition result by 0.5. The current i_dc_w of the phase arm 2 in the W-phase is calculated by adding a current i_w_n of the lower arm 22 and a current i_w_p of the upper arm 21, and further multiplying the addition result by 0.5. This is because the P-N circulating current flows in the phase arm 2 through the upper arm 21 and the lower arm 22.

(Inter-Phase Balance Control 1)

The inter-phase balance control unit 62 suppresses a voltage difference between specific two phases for each voltage phase of 60 degrees. The specific two phases are a set of phases which are connected in parallel, and which have the same polarity of the voltage command value. Since the two phases connected in parallel for each voltage phase of 60 degrees change, the voltage balance among the three phases can be achieved through several times of changes in the connection relation. This inter-phase balance control unit 62 controls the inter-phase circulating DC current that flows between the specific two phase, to suppress a voltage difference.

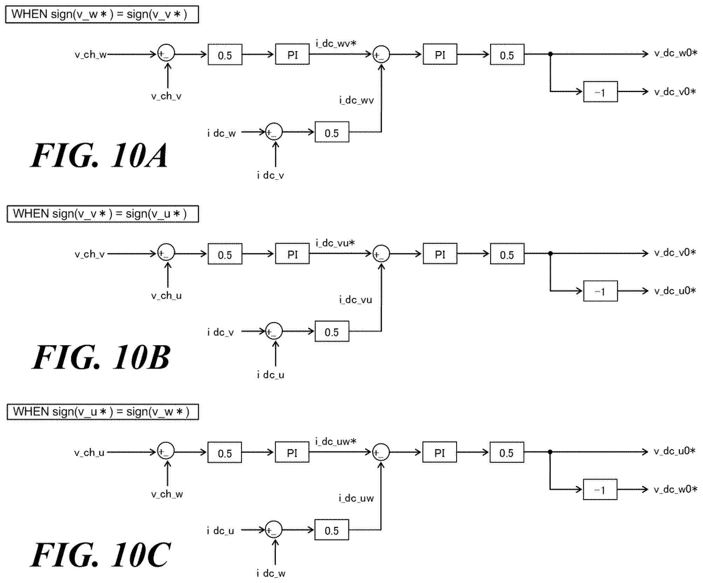

A first voltage control example by the inter-phase balance control unit 62 is illustrated in FIGS. 10 (a) to 10 (c). As illustrated in FIGS. 10(a) to 10(c), the inter-phase balance control unit 62 calculates a circulating current command value between the two phases which causes the voltage difference in the two phases with the same polarity of the voltage command value to be zero, and derives respective DC voltage command values in the two phases for causing the actual circulating current in the two phases to follow the command value.

An example case in which the W-phase and the V-phase have the same polarity will be described. As illustrated in FIG. 10 (a), the inter-phase balance control unit 62 acquires a difference between an average capacitor voltage v_ch_w of all chopper cells 3 in the W-phase and an average capacitor voltage v_ch_v of all chopper cells 3 in the V-phase, multiplies the acquired difference by 0.5, and further executes the PI control to cause the multiplication result to be zero, to calculate an inter-phase circulating current command value i_dc_wv* between the W-phase and the V-phases. Moreover, the inter-phase balance control unit 62 acquires a difference between the inter-phase circulating current i_dc_w detected in the W-phase and the inter-phase circulating current i_dc_v detected in the V-phase, and multiplies the acquired difference by 0.5, to calculate an inter-phase circulating current i_dc_wv between the W-phase and the V-phase.

Next, the inter-phase balance control unit 62 executes the PI control to cause the inter-phase circulating current i_dc_wv between the W-phase and the V-phase to follow the inter-phase circulating current command value i_dc_wv* between the W-phase and the V-phase, to calculate a DC voltage command value v_dc_w0* in the W-phase. Moreover, the inter-phase balance control unit 62 inverts the polarity of the DC voltage command value v_dc_w0* in the W-phase, to calculate a DC voltage command value v_dc_v0* in the V-phase.

Similarly, as illustrated in FIG. 10(b), the inter-phase balance control unit 62 calculates, when the polarity of the voltage command value in the V-phase and in the U-phase are the same, an inter-phase circulating current command value i_dc_vu* between the two phases which causes the capacitor voltage difference between the V-phase and the U-phase to be zero, and derives by the PI control respective DC voltage command values v_dc_u0* and v_dc_v0* in the two phases which cause the inter-phase circulating current i_dc_vu between the V-phase and the U-phase to follow this command value i_dc_vu*.

Moreover, as illustrated in FIG. 10(c), the inter-phase balance control unit 62 calculates, when the polarity of the voltage command value in the U-phase and in the W-phase are the same, an inter-phase circulating current command value i_dc_uw* between the two phases which causes the capacitor voltage difference between the U-phase and the W-phase to be zero, and derives by the PI control respective DC voltage command values v_dc_u0* and v_dc_w0* in the two phases which cause the actual inter-phase circulating current i_dc_uw between the U-phase and the W-phase to follow this command value i_dc_uw*.

(Inter-Phase Balance Control 2)

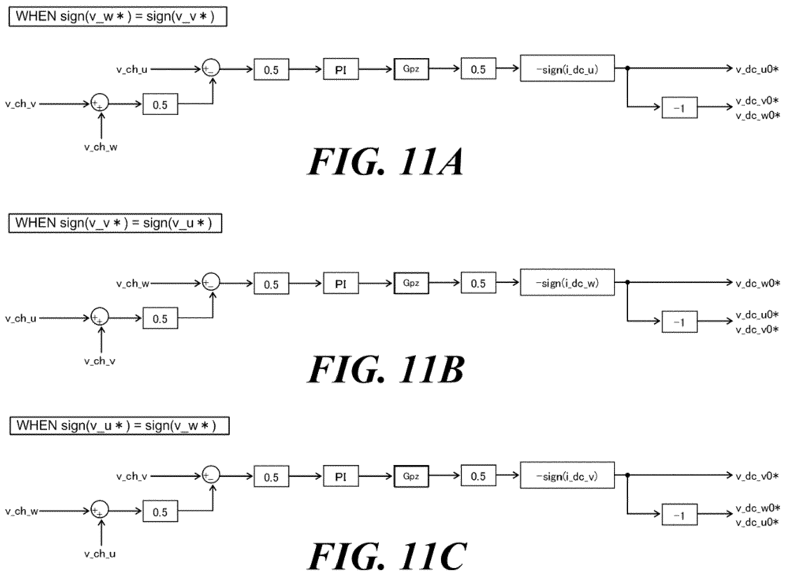

FIGS. 11(a) to 11(c) illustrate a second voltage control example by the inter-phase balance control unit 62. The inter-phase balance control unit 62 may execute a control that causes the voltages of two phases connected in series within a circuit to be consistent. By setting a difference in the output voltages in the two phases in series, the input power to the one phase can be increased and the input power to the other phase can be decreased, correcting the voltage difference in a direction balancing the voltage difference between the two. By causing the total of the increased voltage and the decreased voltage to be zero, the entire voltage between the positive side of the power conversion device 1 and the negative side thereof remains unchanged, and does not affect the P-N circulating current.

An example case in which a voltage command value v_w* in the W-phase and a voltage command value v_v* in the V-phase have the same polarity, that is, the U-phase and the W-phase are in series connection and the U-phase and the V-phase are in series will be described. As illustrated in FIG. 11(a), the inter-phase balance control unit 62 executes the proportional integral to cause a difference between the average value of a capacitor voltage v_ch_u in the U-phase and the average value of the capacitor voltages in the V-phase and the W-phase to be zero, to calculate DC voltage command values v_dc_u0*, v_dc_v0*, and v_dc_w0* in the respective phases which eliminate the voltage difference between the U-phase and the V-phase and the voltage difference between the U-phase and the W-phase.

Typically, the inter-phase balance control unit 62 adds a capacitor voltage average value V_ch_v in the V-phase and a capacitor voltage average value V_ch_w in the W-phase, and multiplies the addition result by 0.5, to calculate respective capacitor voltage average value in the V-phase and the W-phase. Next, after subtracting the capacitor voltage average value in the V-phase and in the W-phase from the capacitor voltage average value V_ch_u in the U-phase and multiplying the subtraction result by 0.5, the inter-phase balance control unit 62 executes the proportional integral control to cause the multiplication result to be zero. The inter-phase balance control unit 62 further multiplies the proportional integral control result by a gain Gpz.

The gain Gpz is a coefficient that adjusts the control response. It is desirable that this gain Gph is designed to maintain the control response unchanged regardless of the P-N circulating current. For example, the gain Gpz is inverse reverse number of the absolute value of a current i_dc_u that flows in the U-phase like the following formula (5).

$$Gpz = \frac{1}{|i\_dc\_u|} \qquad \cdots (5)$$

Finally, the inter-phase balance control unit 62 multiplies the inverse polarity of the current i_dc_u in the U-phase, to calculate the DC voltage command value v_dc_u0* in the U-phase. The inter-phase balance control unit 62 inverts the polarity of the DC voltage command value v_dc_u0* in the U-phase, to calculate the DC voltage command value v_dc_v_0* in the V-phase and the DC voltage command value v_dc_w0* in the W-phase.

Similarly, as illustrated in FIG. 11(b), the inter-phase balance control unit 62 executes the proportional integral to cause the difference between the capacitor voltage average value v_ch_w in the W-phase and the capacitor voltage average value in the U-phase and in the V-phase to be zero, to calculate the DC voltage command values v_dc_u0*, v_dc_v0* and v_dc_w0* in the respective phases that eliminate the voltage difference between the W-phase and the U-phase, and the voltage difference between the W-phase and the V-phase.

Moreover, as illustrated in FIG. 11(c), the inter-phase balance control unit 62 executes the proportional integral to cause the difference between the capacitor voltage average value v_ch_v in the V-phase and the capacitor voltage average value in the U-phase and in the W-phase to be zero, to calculate the DC voltage command values v_dc_u0*, v_dc_v0*, and v_dc_w0* in the respective phases that eliminate the voltage difference between the V-phase and the U-phase, and the voltage difference between the V-phase and the W-phase.

(Overall Control)

Returning to FIG. 5, the controller 6 separately adds the P-N voltage command value v_pn* calculated by the upper-lower arm balance control unit 61 to each of the DC voltage command values v_dc_u0* , v_dc_v0* and v_dc_w0* in the respective phases calculated by the inter-phase balance control unit 62, and applies the respective addition results for the calculation of the voltage command values v_up*, v_un*, v_vp*, v_vn*, v_wp*, and v_wn* for the upper arm and the lower arm in the respective phases. In this calculation, the voltage command values v_u*, v_v*, and v_w*, which are to cause an average of the capacitor voltages of all the chopper cells 3 among the three phases to be the same, may be considered.

In the calculation of the voltage command values v_u*, v_v*, and v_w*, the controller 6 executes the control that causes the average value of the capacitor voltages of all the chopper cells 3 to be a predetermined value by an active component i_d of the AC current that flows into the chopper cells 3. First, the control unit calculates an average value v_ch of the capacitor voltages of all the chopper cells 3, and calculates a D-axis current command value i_d* to follow a command value v ch*.

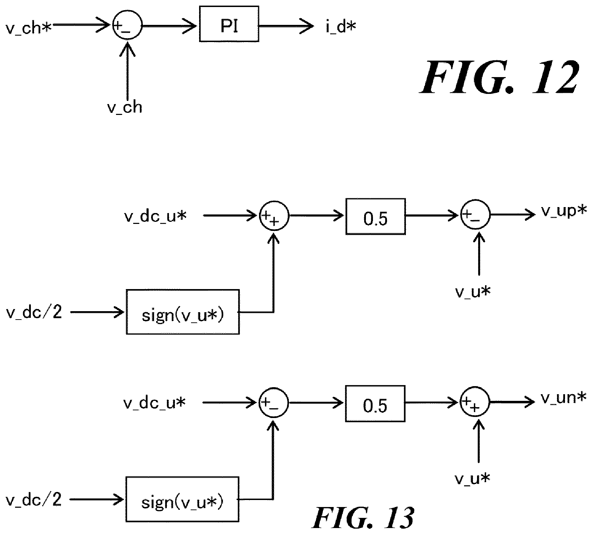

As illustrated in FIG. 12, the controller 6 calculates the average value v_ch of the capacitor voltages of all the chopper cells 3, acquires a difference between the command value v_ch* and the average value v_ch, and executes the PI control to cause this difference to be zero, to calculate the D-axis current command value i_d*.

Moreover, the controller 6 calculates, from the output AC currents i_w, i_u, i_v in the respective phases, a D-axis current i_d and a Q-axis current i_q. Taking the current i_u in the U-phase as an example, the output AC current i_u is estimated by receiving a current i_up of the upper arm in the U-phase and a current i_un of the lower arm in the U-phase from the current detector, and subtracting the current i_un of the lower arm in the U-phase from the current i_up of the upper arm. Moreover, the D-axis current i_d and the Q-axis current i_q are calculated by executing the three-phase/DQ conversion on the estimated output AC currents i_u, i_v, and i_w in the respective phases.

Next, the controller 6 executes the PI control in so that the D-axis current i_d and a Q-axis current i_q follow a D-axis current command value i_d* and a Q-axis current command value i_q*, to calculate a D-axis voltage command value v_d* and a Q-axis voltage command value v_q*, and further executes a DQ/three-phase conversion on the D-axis voltage command value v_d* and the Q-axis voltage command value v_q*, to acquire the voltage command values v_u*, v_v*, and v_w*.

Since the calculation scheme of the voltage command values v_up*, v_un*, v_vp*, v_vn*, v_wp*, and v_wn* for the upper arm 21 and the lower arm 22 in the respective phases and the calculation scheme in the V-phase and the W-phase are the same, the following description will be given of examples that are the voltage command values v_up* and v_un* for the upper arm 21 and the lower arm 22 in the U-phase.

As illustrated in FIG. 13, the controller 6 adds, to the DC voltage command value v_dc_u* for achieving a balance between the inter-phases and the upper and lower arms 21 and 22, a value acquired by multiplying the DC voltage V_dc/2 by the polarity of the voltage command value v_u* in the U-phase, multiplies the addition result by 0.5, and subtracts the voltage command value v_u* in the U-phase from the multiplication result. The voltage command value v_up* for the upper arm 21 in the U-phase is calculated by this calculation.

Moreover, the controller 6 subtracts, from the DC voltage command value v_dc_u* for achieving a balance between the inter-phases and the upper and lower arms 21 and 22, a value acquired by multiplying the DC voltage v_dc/2 by the polarity of the voltage command value v_u* in the U-phase, multiplies the subtraction result by 0.5, and subtracts the voltage command value v_u* in the U-phase from the multiplication result. The voltage command value v_un* for the lower arm in the U-phase is calculated by this calculation.

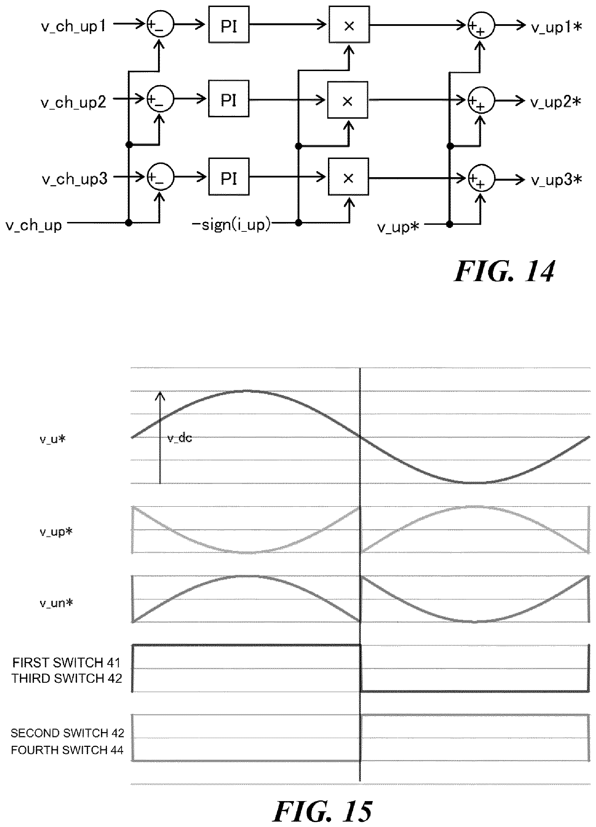

FIG. 14 is a control block diagram for causing a capacitor voltage of the chopper cells 3 to be the same. When causing the upper and lower arms 21 and 22 in each phase to output the voltages, the controller 6 further executes a control that causes the capacitor voltages of all the chopper cells 3 in the upper arm 21 to be the same, and the capacitor voltages of all the chopper cells 3 in the lower arm 22 to be the same.

That is, since the capacitor 33 of the chopper cell 3 is charged when the polarity of the current that flows through the chopper cell 3 is positive, the controller 6 increases the output voltage of the chopper cell 3 with the small capacitor voltage, and decreases the output voltage of the chopper cell 3 with the large capacitor voltage. Since the capacitor 33 is discharged when the polarity of the current that flows through the chopper cell 3 is negative, the control unit decreases the output voltage of the chopper cell 3 with the small capacitor voltage, and increases the output voltage of the chopper cell 3 with the large capacitor voltage.

The chopper cells 3 of the upper arm 21 in the U-phase is taken as an example. For example, as for the first chopper cell 3 in the upper arm 21, the capacitor voltage average value v_ch_up of all the chopper cells 3 in the upper arm 21 is subtracted from a capacitor voltage v_ch_up1 of the first chopper cell 3, and the subtraction result is multiplied by a proportional integral gain.

The multiplication result is further multiplied by a value that is the current i_ip of the upper arm 21 in the U-phase with the inverted polarity, and the voltage command value v_up* for the chopper cells 3 of the upper arm 21 in the U-phase is added to the multiplication result. A voltage command value v_up1* for the first chopper cell 3 of the upper arm 21 is calculated by the above calculation. Similarly, a voltage command value v_up2* for the second chopper cell 3 in the upper arm 21, and a voltage command value v up3* for the third chopper cell 3 in the upper arm 21 are calculated.

Next, the controller 6 controls the chopper cells 3 in accordance with the voltage command values v_up1*, v_up2*, v_up3*, and the like, for the respective chopper cells 3. At this time, as illustrated in FIG. 15, when the voltage command value v_u* in the U-phase commands the positive voltage, the controller 6 turns ON the first switch 41 and the third switch 43, and turns OFF the second switch 42 and the fourth switch 44.

Hence, as for the entire upper arm 21 in the U-phase, in accordance with the voltage command value v_up*, the output voltage is sequentially changed from a decrease to an increase, and a difference voltage between v_dc/2 of the DC power supply 100 and the voltage command value v_u* is output. As for the entire lower arm 22 in the U-phase, in accordance with the voltage command value v_un*, the output voltage is sequentially changed from an increase to a decrease, and a difference voltage between the voltage command value v_u* and the reference potential is output.

Moreover, as illustrated in FIG. 15, when the voltage command value v_u* in the U-phase commands the negative voltage, the controller 6 turns ON the second switch 42 and the fourth switch 44, and turns OFF the first switch 41 and the third switch 43. Accordingly, as for the entire upper arm 21 in the U-phase, in accordance with the voltage command value v_up*, a difference voltage between the reference potential and the voltage command value v_u* is output, and as for the entire lower arm 22 in the U-phase, in accordance with the voltage command value v_un*, the output voltage is sequentially changed from an increase to a decrease, and a difference voltage between the voltage command value v_u*, and -v_dc/2 of the DC power supply 100 is output.

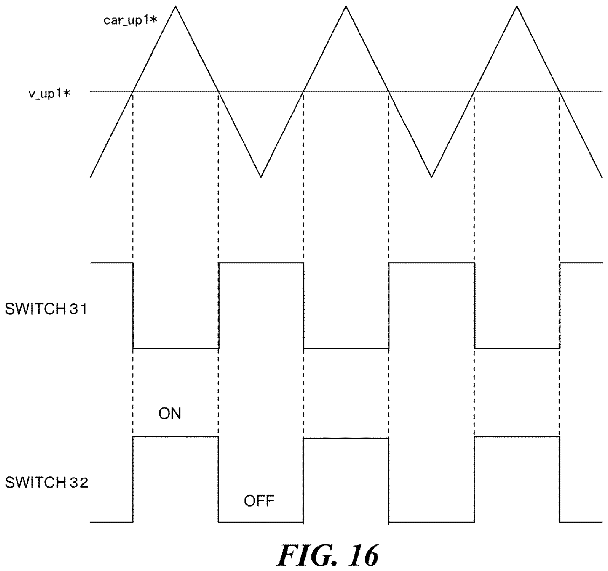

As illustrated in FIG. 16, in the individual chopper cell 3, when the voltage command value v_up1* is taken as an example, the controller 6 compares a carrier triangular wave car_up1 with the voltage command v_up1*. When the output voltage command value v_up1* is greater than the carrier triangular wave car_up1, the controller 6 turns ON the switch 31, and turns OFF the switch 32 to charge and discharge the capacitor 33. When the output voltage command value v_up1* is smaller than the carrier triangular wave car_up1, the controller 6 turns OFF the switch 31 and turns ON the switch 32 to stop the capacitor to output the voltage.

When the upper arm 21 and the lower arm 22 each include the n number of chopper cells, by shifting the phase of the carrier triangular wave by each 360/n degrees, an equivalent carrier frequency can be increased to n times as much as the carrier triangular wave frequency, and the harmonic voltage in the output AC voltage can be reduced. Moreover, by shifting the phase of the carrier triangular wave applied for the lower arm 22 by 180 degrees relative to the upper arm 21, the harmonic voltage in the output AC voltage can further be reduced.


(Action and Effect)

As described above, this power conversion device 1 is an NPC-MMC, superimposes the AC current on the P-N circulating current, and suppresses a voltage difference between the upper arm 21 and the lower arm 22 by the AC current. Hence, even if there is only one path through which the P-N circulating current flows, the voltage difference between the upper arm 21 and the lower arm 22 can be suppressed. Moreover, since the power based on the AC current per a cycle unit is zero, the voltage difference between the upper arm 21 and the lower arm 22 can be suppressed without affecting the transmitted power. Accordingly, the power conversion device 1 that is an NPC-MMC eliminates an interference between the output voltage by the upper arm 21 and the output voltage by the lower arm 22, achieving a voltage stabilization.

When, for example, the AC current to be superimposed is in two kinds of different frequencies, as for the imbalance in the voltage difference between the upper arm 21 and the lower arm 22, the normal-phase component and the reverse-phase component are suppressed by one AC current, and the zero-phase component is suppressed by the other AC current. Although the AC current for the normal-phase component and the reverse-phase component is set to be 1 time the output AC frequency at the output terminal, the voltage difference can be similarly and easily controlled when such an AC current is controlled to have a $6N\pm1$ (where N is a natural number) times frequency. Moreover, although the AC current for the zero-phase component is set to be 3 times the output AC frequency at the output terminal, the voltage difference can be similarly and easily controlled when such an AC current is controlled to have a 3x (2N-1) (where N is a natural number) times frequency.

Furthermore, the proportional integral control that causes the normal-phase component and the reverse-phase component to be zero is executed, and the control gain Gp of the proportional integral control is changed in accordance with the modulation rate of the output AC voltage at the output terminal. The proportional integral control that causes the zero-phase component to be zero is executed, and the control gain Gz of the proportional integral control is changed in accordance with the modulation rate of the output AC voltage at the output terminal. This achieves the constant control response even if the modulation rate M changes.

Moreover, the low-pass filter detects the normal-phase component and the reverse-phase component in the voltage imbalance between the upper arm 21 and the lower arm 22. This enables an elimination of pulsation of the output AC voltage frequency, that is, the ripple voltage component.

Furthermore, this power conversion device 1 causes the inter-phase circulating current to flow between the phase arms 2 connected in parallel, controls the inter-phase circulating current, and suppresses the imbalance in the voltage difference between the phase arms 2 connected in parallel. Alternatively, this power conversion device 1 controls the voltage command value for the phase arms 2 in the two phases connected in series to suppress the imbalance in the voltage difference between the phase arms 2 in the two phases connected in series. Hence, the power conversion device 1 that is an NPC-MMC has no interference of output voltage between the phases, achieving the voltage stabilization.

As for the scheme exemplified in FIG. 10 of causing the inter-phase circulating current to flow between the phase arms 2 connected in parallel, and controlling such an inter-phase circulating current to suppress the imbalance in the voltage difference between the phase arms connected in parallel, and the scheme exemplified in FIG. 11 of controlling the voltage command value for the phase arms 2 in the two phases connected in series to suppress the imbalance in the voltage difference between the phase arms 2 in the two phases connected in series, either one scheme may be applied or both schemes may be applied.

When both the schemes are applied, since the parallel two phases achieve a voltage balance by the inter-phase circulating current, and the series two phases achieve the voltage balance by having an output voltage difference, a balance among the three phases can be achieved even in any voltage phase, and the balance among the three phases can be promptly and precisely achieved. Moreover, in the case of achieving a balance by the inter-phase circulating current, the balance between the phases can be achieved in a state in which a power transmission is suspended, immediately after activation, and in a stand-by state.

In order to suppress the imbalance in the voltage difference between the phase arms 2 in the two phases connected in series by controlling the voltage command value for the phase arms 2 in the two phases connected in series, in the two phases connected in series, the voltage command value for the one phase arm 2 in the phase arms 2 may be increased, and the voltage command value for the other phase arm 2 may be decreased, to cause the total of an increase in the voltage command value for the one phase arm 2 and a decrease in the voltage command value for the other phase arm 2 to be zero.

At this time, by executing the proportional integral control that causes both of the voltages of the phase arms 2 in the two phases connected in series to be zero, and by changing the control gain Gpz of the proportional integral control in accordance with the current that flows through the phase arm 2, the constant control response can be achieved.

(Other embodiments)

In this specification, although the embodiment according to the present disclosure has been described, such an embodiment is merely presented as an example, and is not intended to limit the scope of the present disclosure. The above embodiment can be carried out in other various forms, and various omissions, replacements, and modifications can be made thereto without departing from the scope of the present disclosure. Such embodiments and modifications thereof are within the scope of the present disclosure, and also within the scope of the invention as recited in the appended claims and the equivalent range thereto.

REFERENCE SIGNS LIST

| | |
|---|---|
| 1 | Power conversion device |
| 2 | Phase arm |
| 21 | Upper arm |
| 22 | Lower arm |
| 23 | Output terminal |
| 3 | Chopper cell |
| 31 | Switch |
| 32 | Switch |

| 33 | Capacitor |
|----|-----------|
| 34 | Diode |
| 4 | Valve |
| 41 | First switch |
| 42 | Second switch |
| 43 | Third switch |
| 44 | Fourth switch |
| 5 | Neutral-point |
| 6 | Controller |
| 61 | Upper-lower arm balance control unit |
| 62 | Inter-phase balance control unit |
| 7 | Buffer reactor |
| 100 | DC power supply |
| 200 | Ac power system |
| 201 | Three-phase transformer |

**Claims**

1. A power conversion device (1) provided between a DC power supply (100) and an AC power system (200), and mutually converting AC and DC, the power conversion device comprising:

   respective phase arms (2) in three phases each comprising a plurality of chopper cells (3) connected in series;
   an upper arm (21) and a lower arm (22) formed by dividing the chopper cells (3) in the phase arm (2) into two;
   an output terminal (23) provided between the upper arm (21) and the lower arm (22), and configured to be connected to the AC power system (200);
   a first switch (41) and a fourth switch (44) provided at both ends of the phase arm (2), and provided between the phase arm (2) and the DC power supply (100);
   a second switch (42) and a third switch (43) connected in series between the first switch (41) and the fourth switch (44), and connected in parallel with the phase arm (2);
   respective neutral-points (5) in the three phases provided between the second switch (42) and the third switch (43), and connected with each other; and
   a controller (6) configured to control the chopper cells (3) and the first to fourth switches (41, 42, 43, 44), wherein the controller (6):

      is configured to control the first to fourth switches (41, 42, 43, 44) to form, in each voltage phase of the AC power system, combination circuits in which each of the phase arms (2) in twophases are connected in parallel, and the phase arm (2) in the remaining phase is connected in series to the phase arms (2) connected in parallel;
      is configured to control the chopper cells (3) to superimpose an AC current on a P-N circulating current that circulates between a positive side of the DC power supply (100) and a negative side thereof via the combination circuit;
      is configured to control the AC current to suppress an imbalance in a voltage difference between the upper arm (21) and the lower arm (22);

      **characterized by** that the controller (6) is configured to superimpose two kinds of the AC current with different frequencies, and as for the imbalance that is the voltage difference between the upper arm (21) and the lower arm (22), to suppress a normal-phase component and a reverse-phase component by the one AC current and to suppress a zero-phase component by the other AC current.

2. The power conversion device according to claim 1, wherein the controller is configured to superimpose the one AC current that has a one or $6N \pm 1$, where N is a natural number, times frequency of an output AC frequency at the output terminal.

3. The power conversion device according to claim 2, wherein the controller is configured to :

   execute a proportional integral control that causes the normal-phase component and the reverse-phase component to be zero; and

change a control gain Gp of the proportional integral control in accordance with a modulation rate of an output AC voltage at the output terminal.

4. The power conversion device according to claim 3, wherein the control gain Gp is expressed by a following formula (1), with a modulation factor M corresponding to the ratio of an amplitude value of an output AC voltage of the AC power system relative to a DC voltage of the DC power supply :

$$Gp = \frac{1}{\left(\frac{4}{3} + \frac{\sqrt{3}}{2\pi}\right)M - \frac{6}{2\pi}}$$

5. The power conversion device according to any one of claims 1 to 4, wherein the controller:

comprises a low-pass filter; and
is configured to detect the normal-phase component and the reverse-phase component among the in balance in voltages between the upper arm and the lower arm by the low-pass filter.

6. The power conversion device according to claim 1, wherein the controller is configured to superimpose the other AC current that has 6N-3, where N is a natural number, times frequency of an output AC frequency at the output terminal.

7. The power conversion device according to claim 6, wherein the controller is configured to :

execute a proportional integral control that causes the reverse-phase component to be zero; and
change a control gain Gz of the proportional integral control in accordance with a modulation rate of an output AC voltage at the output terminal.

8. The power conversion device according to claim 7, wherein the control gain Gz is expressed by a following formula (2) :

$$Gz = \frac{1}{-\frac{3\sqrt{3}}{4\pi}M + \frac{1}{6\pi}}$$

9. The power conversion device according to claim 1, wherein the controller is configured to :

control the chopper cells to cause an inter-phase circulating current that flows between the phase arms connected in parallel to flow; and
control the inter-phase circulating current to suppress the imbalance in the voltage difference between the phase arms connected in parallel.

10. The power conversion device according to claim 1, wherein the controller is configured to control a voltage command value for the phase arms in the two phases connected in series to suppress the imbalance in the voltage difference between the phase arms in the two phases connected in series.

**11.** The power conversion device according to claim 10, wherein the controller is configured to :

increase a voltage command value for the one phase arm in the phase arms in the two phases connected in series, and decreases a voltage command value for the other phase arm; and
cause a total of an increase in the voltage command value for the one phase arm and a decrease in the voltage command value for the other phase arm to be zero.

**12.** The power conversion device according to claim 11, wherein the controller is configured to :

execute a proportional integral control that causes both of the voltages of the phase arms in the two phases connected in series to be zero; and
change a control gain of the proportional integral control in accordance with a current that flows through the phase arm.

**13.** The power conversion device according to claim 12, wherein the control gain is an inverse number of an absolute value of a current that flows through the phase arm not connected in parallel with the other phase arm and in solo.

**14.** The power conversion device according to any one of claims 1 to 13, wherein the controller is configured to calculate various currents based on a current value of each of the phase arms in each of the three phases.

**Patentansprüche**

**1.** Stromrichter-Vorrichtung (1), die zwischen einer Gleichstrom-Leistungsversorgung (100) und einer Wechselstrom-Leistungsversorgung (200) bereitgestellt ist und gegenseitig Wechselstrom und Gleichstrom umwandelt, wobei die Stromrichter-Vorrichtung umfasst:

jeweilige Phasenarme (2) in drei Phasen, von denen jede mehrere Hackerzellen (3) umfasst, die in Serie angeschlossen sind;
einen oberen Arm (21) und einen unteren Arm (22), die durch Teilen der Hackerzellen (3) in dem Phasenarm (2) in zwei gebildet sind;
ein Ausgangsterminal (23), das zwischen dem oberen Arm (21) und dem unteren Arm (22) bereitgestellt ist und ausgestaltet ist, um an das Wechselstrom-Leistungssystem (200) angeschlossen zu sein;
einen ersten Schalter (41) und einen vierten Schalter (44), die an beiden Enden des Phasenarms (2) bereitgestellt sind, und zwischen dem Phasenarm (2) und der Gleichstrom-Leistungsversorgung (100) bereitgestellt sind;
einen zweiten Schalter (42) und einen dritten Schalter (43), die in Serie zwischen dem ersten Schalter (41) und dem vierten Schalter (44) angeschlossen sind und mit dem Phasenarm (2) parallel angeschlossen sind;
jeweilige Neutralpunkte (5) in den drei Phasen, die zwischen dem zweiten Schalter (42) und dem dritten Schalter (43) bereitgestellt sind und aneinander angeschlossen sind; und
eine Steuervorrichtung (6), die zum Steuern der Hackerzellen (3) und dem ersten bis zum vierten Schalter (41, 42, 43, 44) ausgestaltet ist,
wobei die Steuervorrichtung (6):

zum Steuern des ersten bis vierten Schalters (41, 42, 43, 44) ausgestaltet ist, um in jeder Spannungsphase des Wechselstrom-Leistungssystems Kombinationsschaltungen zu bilden, bei denen jeder Phasenarm (2) in zwei Phasen parallel angeschlossen ist und der Phasenarm (2) in der verbleibenden Phase in Serie an die Phasenarme (2) angeschlossen ist, die parallel angeschlossen sind,
ausgestaltet ist, um die Hackerzellen (3) zu steuern, um einen Wechselstrom auf einem P-N umlaufenden Strom zu überlagern, der zwischen einer positiven Seite der Gleichstrom-Leistungsversorgung (100) und einer negativen Seite davon über die Kombinationsschaltung fließt;
ausgestaltet ist, um den Wechselstrom zu steuern, um ein Ungleichgewicht in einer Spannungsdifferenz zwischen dem oberen Arm (21) und dem unteren Arm (22) zu unterdrücken;
**dadurch gekennzeichnet, dass** die Steuervorrichtung (6) ausgestaltet ist, um zwei Arten von Wechselstrom mit unterschiedlichen Frequenzen zu überlagern und hinsichtlich des Ungleichgewichts, das die Spannungsdifferenz zwischen dem oberen Arm (21) und dem unteren Arm (22) ist, zu überlagern, um eine Normalphasen-Komponente und eine Umkehrphasen-Komponente durch den einen Wechselstrom zu unterdrücken und eine Nullphasen-Komponente durch den anderen Wechselstrom zu unterdrücken.

**2.** Stromrichter-Vorrichtung nach Anspruch 1, wobei die Steuervorrichtung ausgestaltet ist, um den einen Wechselstrom zu überlagern, der ein oder 6N±1 Mal de Frequenz einer Ausgangs-Wechselstromfrequenz am Ausgangsterminal aufweist, wobei N eine natürliche Zahl ist.

**3.** Stromrichter-Vorrichtung nach Anspruch 2, wobei die Steuervorrichtung ausgestaltet ist, um:

eine proportionale integrale Steuerung auszuführen, die die Normalphasen-Komponente und die Umkehrphasen-Komponente veranlasst, Null zu sein; und
eine Steuerverstärkung Gp der proportionalen integralen Steuerung gemäß einer Modulationsrate einer Ausgangs-Wechselspannung am Ausgangsterminal zu ändern.

**4.** Stromrichter-Vorrichtung nach Anspruch 3, wobei die Steuerverstärkung Gp durch eine folgende Formel (1) mit einem Modulationsfaktor M ausgedrückt ist, der dem Verhältnis eines Amplitudenwertes einer Ausgangs-Wechselspannung des Wechselspannungs-Leistungssystems in Bezug auf eine Gleichstrom-Spannung der Gleichstrom-Leistungsversorgung entspricht:

$$Gp = \frac{1}{\left(\dfrac{4}{3} + \dfrac{\sqrt{3}}{2\pi}\right)M - \dfrac{6}{2\pi}}$$

**5.** Stromrichter-Vorrichtung nach irgendeinem der Ansprüche 1 bis 4, wobei die Steuervorrichtung:

einen Tiefpassfilter umfasst; und
ausgestaltet ist, um die Normalphasen-Komponente und die Umkehrphasen-Komponente aus dem Ungleichgewicht bei den Spannungen zwischen dem oberen Arm und dem unteren Arm durch den Tiefpassfilter zu detektieren.

**6.** Stromrichter-Vorrichtung nach Anspruch 1, wobei die Steuervorrichtung ausgestaltet ist, um den anderen Wechselstrom zu überlagern, der 6N-3 Mal die Frequenz einer Ausgangs-Wechselstromfrequenz am Ausgangsterminal aufweist, wobei N eine natürliche Zahl ist.

**7.** Stromrichter-Vorrichtung nach Anspruch 6, wobei die Steuervorrichtung ausgestaltet ist, um:

eine proportionale integrale Steuerung auszuführen, die die Umkehrphasen-Komponente veranlasst, Null zu sein; und
eine Steuerverstärkung Gz der proportionalen integralen Steuerung gemäß einer Modulationsrate einer Ausgangs-Wechselspannung am Ausgangsterminal zu ändern.

**8.** Stromrichter-Vorrichtung nach Anspruch 7, wobei die Steuerverstärkung Gz durch eine folgende Formel (2) ausgedrückt ist:

$$Gz = \frac{1}{-\dfrac{3\sqrt{3}}{4\pi}M + \dfrac{1}{6\pi}}$$

**9.** Stromrichter-Vorrichtung nach Anspruch 1, wobei die Steuervorrichtung ausgestaltet ist, um:

die Hackerzellen zu steuern, um einen zwischen den Phasen fließenden Strom zu verursachen, der zwischen

EP 3 413 456 B1

den Phasenarmen fließt, die parallel zum Fluss angeschlossen sind; und
den zwischen den Phasen fließenden Strom zu steuern, um das Ungleichgewicht bei der Spannungsdifferenz zwischen den parallel angeschlossenen Phasenarmen zu unterdrücken.

10. Stromrichter-Vorrichtung nach Anspruch 1, wobei die Steuervorrichtung ausgestaltet ist, um einen Spannungssteuerwert für die Phasenarme in den zwei in Serie angeschlossenen Phasen zu steuern, um das Ungleichgewicht bei der Spannungsdifferenz zwischen den Phasenarmen in den zwei in Serie angeschlossenen Phasen zu unterdrücken.

11. Stromrichter-Vorrichtung nach Anspruch 10, wobei die Steuervorrichtung ausgestaltet ist, um:

einen Spannungssteuerwert für den einen Phasenarm in den Phasenarmen in den zwei in Serie angeschlossenen Phasen zu erhöhen und einen Spannungssteuerwert für den anderen Phasenarm zu senken; und
eine Summe eines Anstiegs in dem Spannungssteuerwert für den einen Phasenarm und eine Abnahme bei dem Spannungssteuerwert für den anderen Phasenarm auf null zu verursachen.

12. Stromrichter-Vorrichtung nach Anspruch 11, wobei die Steuervorrichtung ausgestaltet ist, um:

eine proportionale integrale Steuerung auszuführen, die die beiden Spannungen der Phasenarme in den zwei in Serie geschalteten Phasen veranlasst, Null zu sein; und
eine Steuerverstärkung der proportionalen integralen Steuerung in Übereinstimmung mit einem Strom zu ändern, der durch den Phasenarm fließt.

13. Stromrichter-Vorrichtung nach Anspruch 12, wobei die Steuerverstärkung eine Umkehrzahl eines absoluten Wertes eines Stroms ist, der durch den Phasenarm fließt, der an den anderen Phasenarm nicht parallel angeschlossen und allein ist.

14. Stromrichter-Vorrichtung nach irgendeinem der Ansprüche 1 bis 13, wobei die Steuervorrichtung ausgestaltet ist, um verschiedene Ströme basierend auf einem Stromwert jedes Phasenarms in jeder der drei Phasen zu berechnen.

**Revendications**

1. Dispositif de conversion de puissance (1) prévu entre une alimentation électrique CC (100) et une alimentation électrique CA (200), et convertissant réciproquement le courant alternatif et le courant continu, le dispositif de conversion de puissantes comprenant :

des bras de phases respectifs (2) en trois phases comprenant chacun une pluralité de cellules de hacheur (3) connectées en série;
un bras supérieur (21) et un bras inférieur (22) formé en divisant les cellules de hacheur (3) dans le bras de phase (2) en deux;
une borne de sortie (23) prévue entre le bras supérieur (21) et le bras inférieur (22), et configurée pour être connectée au système d'alimentation électrique CA (200);
un premier commutateur (41) et un quatrième commutateur (44) prévus aux deux extrémités du bras de base (2), et prévus entre le bras de phase (2) et l'alimentation électrique CC (100);
un deuxième commutateur (42) et un troisième commutateur (43) connectés en série entre le premier commutateur (41) et le quatrième commutateur (44), et connectés en parallèle avec le bras de base (2);
des points neutres respectifs (5) dans les trois phases prévues entre le deuxième commutateur (42) et le troisième commutateur (43), et connectées les uns aux autres ; et
un contrôleur (6) configuré pour commander les cellules de hacheur (3) et le premier au quatrième commutateur (41,42,43,44),
dans lequel le contrôleur (6):

est configuré pour commander le premier au quatrième commutateur (41,42,43,44) pour former, dans chaque phase de tension du système d'alimentation électrique CA, des circuits de combinaison dans lesquels chacun des bras de base (2) dans deux phases sont connectés en parallèle, et le bras de phase (2) dans la phase restante est connecté en série aux bras de base (2) connectés en parallèle;
est connecté pour commander les cellules de hacheur (3) afin de superposer un courant CA sur un courant circulant P-N qui circule entre le côté positif de l'alimentation électrique CC (100) et un côté négatif de cette dernière via le circuit de combinaison;

est configuré pour commander le courant CA afin de supprimer un déséquilibre dans une différence de tension entre le bras supérieur (21) et le bras intérieur (22);

**caractérisé en ce que** le contrôleur (6) est configuré pour superposer deux types du courant CA avec des fréquences différentes, et en ce qui concerne le déséquilibre de différence de tension entre le bras supérieur (21) et le bras inférieur (22) pour supprimer un composant de phase normale et un composant de phase inverse par un courant CA et pour supprimer un composant de phase zéro par l'autre courant CA.

2. Dispositif de conversion de puissance selon la revendication 1, dans lequel le contrôleur est configuré pour superposer un courant CA qui a un ou 6N±1, où N est un nombre naturel fois la fréquence d'une fréquence de sortie CA au niveau de la borne de sortie.

3. Dispositif de conversion de puissance selon la revendication 2, dans lequel le contrôleur est configuré pour :

exécuter une commande intégrale proportionnelle qui amène le composant de phase normale et le composant de phase inverse à être zéro; et

modifier un gain de commande Gp de la commande intégrale proportionnelle conformément à un taux de modulation d'une tension de sortie CA au niveau de la borne de sortie.

4. Dispositif de conversion de puissance selon la revendication 3, dans lequel le gain de commande Gp est exprimé par une formule suivante (1), avec un facteur de modulation M correspondant au rapport d'une valeur d'amplitude d'une tension CA de sortie du système d'alimentation électrique CA a par rapport à une tension CC de l'alimentation électrique CC:

$$Gp = \frac{1}{\left(\frac{4}{3} + \frac{\sqrt{3}}{2\pi}\right)M - \frac{6}{2\pi}}$$

5. Dispositif de conversion de puissance selon une quelconque des revendications 1 à 4, dans lequel le contrôleur :

comprend un filtre passe-bas; et

est configuré pour détecter le composant de phase normale et le composant de phase inverse parmi le déséquilibre des tensions entre le bras supérieur et le bras inférieur par le filtre passe-bas.

6. Dispositif de conversion de puissance selon la revendication 1, dans lequel le contrôleur est configuré pour superposer l'autre courant CA qui a 6N-3, où N est un nombre naturel fois la fréquence d'une fréquence de sortie CA au niveau de la borne de sortie.

7. Dispositif de conversion de puissance selon la revendication 6, dans lequel le contrôleur est configuré pour :

exécuter une commande intégrale proportionnelle qui amène le composant de phase inverse à être zéro; et

modifier un gain de commande Gz de la commande intégrale proportionnelle conformément à un modulation d'une tension de sortie CA au niveau de la borne de sortie.

8. Dispositif de conversion de puissance selon la revendication 7, dans lequel le gain de commande Gz est exprimé par une formule suivante (2):

$$Gz = \cfrac{1}{-\cfrac{3\sqrt{3}}{4\pi}M + \cfrac{1}{6\pi}}$$

9. Dispositif de conversion de puissance selon la revendication 1, dans lequel le contrôleur est configuré pour :

commander les cellules de hacheur pour amener un courant de circulation interphase qui circule entre les bras de phase connectés en parallèle à circuler ; et
commander le courant de circulation interphase afin de supprimer le déséquilibre dans les différences de tension entre les bras de base connectés en parallèle.

10. Dispositif de conversion de puissance selon la revendication 1, dans lequel le contrôleur est configuré pour commander une valeur de commande de tension pour les bras de phase dans les deux phases connectées en série afin de supprimer le déséquilibre dans les différentes tensions entre les bras de phase dans les deux phases connectées en série.

11. Dispositif de conversion de puissance selon la revendication 10, dans lequel le contrôleur est configuré pour:

augmenter une valeur de commande de tension pour un bras de phase dans les bras de base dans les deux phases connectées en série, et diminuer une valeur de commande de tension pour l'autre bras de phase; et
amener un total d'une augmentation dans la valeur de commande de tension pour un bras de phase et une diminution dans la valeur de commande de tension pour l'autre bras de phase à être zéro.

12. Dispositif de conversion de puissance selon la revendication 11, dans lequel le contrôleur est configuré pour:

exécuter une commande intégrale proportionnelle qui amène les deux tensions des bras de phase dans les deux phases connectées en série à être zéro; et
modifier un gain de commande de la commande intégrale proportionnelle conformément à un courant qui circule à travers le bras de phase.

13. Dispositif de conversion de puissance selon la revendication 12, dans lequel le gain de commande est un nombre inverse d'une valeur absolue d'un courant qui circule à travers le bras de base non connecté en parallèle avec l'autre bras de phase et isolément.

14. Dispositif de conversion de puissance selon une quelconque des revendications 1 à 13, dans lequel le contrôleur est configuré pour calculer différents courants sur la base d'une valeur de courant de chacun des bras de phase dans chacune des trois phases.

*FIG. 1*

EP 3 413 456 B1

**FIG. 2**

## FIG. 3A

## FIG. 3B

| U-PHASE VOLTAGE PHASE $\theta$ (rad) | PHASE(S) CONNECTED TO POSITIVE SIDE OF DC POWER SUPPLY | PHASE(S) CONNECTED TO NEGATIVE SIDE OF DC POWER SUPPLY |
|---|---|---|
| $0 \sim \pi / 3$ | U, W | V |
| $\pi / 3 \sim 2\pi / 3$ | U | V, W |
| $2\pi / 3 \sim \pi$ | U, V | W |
| $\pi \sim 4\pi / 3$ | V | U, W |
| $4\pi / 3 \sim 5\pi / 3$ | V, W | U |
| $5\pi / 3 \sim 2\pi$ | W | U, V |

*FIG. 4*

*FIG. 5*

v_ch_y_a →［LOW-PASS FILTER］→［PI］→ i_amp_pn_a* →［sin ωt］→ i_pn1_a* →（+ +）→［Gp］→ i_pn1*

v_ch_y_b →［LOW-PASS FILTER］→［PI］→ i_amp_pn_b* →［sin(ωt−π/2)］→ i_pn1_b* →

*FIG. 6*

v_ch_y_z →［PI］→ i_amp_pn_z* →［sin3ωt］→ i_pn1_z* →［Gz］→ i_pn3*

*FIG. 7*

v_dc* →（+ −）→［PI］→ i_pn0*

v_dc ↑

*FIG. 8*

25

i_dc_u

i_dc_v

i_dc_w

0.5

i_pn

*FIG. 9*

WHEN sign(v_w*) = sign(v_v*)

**FIG. 10A**

WHEN sign(v_v*) = sign(v_u*)

**FIG. 10B**

WHEN sign(v_u*) = sign(v_w*)

**FIG. 10C**

27

EP 3 413 456 B1

WHEN sign(v_w ∗ ) = sign(v_v ∗ )

v_ch_u ──→ (+ _) ──→ | 0.5 | ──→ | PI | ──→ | Gpz | ──→ | 0.5 | ──→ | −sign(i_dc_u) | ──●──→ v_dc_u0∗

v_ch_v ──→ (+ +) ──→ | 0.5 | ──↑
v_ch_w ──↑

●──→ | −1 | ──→ v_dc_v0∗
                   v_dc_w0∗

## FIG. 11A

WHEN sign(v_v ∗ ) = sign(v_u ∗ )

v_ch_w ──→ (+ _) ──→ | 0.5 | ──→ | PI | ──→ | Gpz | ──→ | 0.5 | ──→ | −sign(i_dc_w) | ──●──→ v_dc_w0∗

v_ch_u ──→ (+ +) ──→ | 0.5 | ──↑
v_ch_v ──↑

●──→ | −1 | ──→ v_dc_u0∗
                   v_dc_v0∗

## FIG. 11B

WHEN sign(v_u ∗ ) = sign(v_w ∗ )

v_ch_v ──→ (+ _) ──→ | 0.5 | ──→ | PI | ──→ | Gpz | ──→ | 0.5 | ──→ | −sign(i_dc_v) | ──●──→ v_dc_v0∗

v_ch_w ──→ (+ +) ──→ | 0.5 | ──↑
v_ch_u ──↑

●──→ | −1 | ──→ v_dc_w0∗
                   v_dc_u0∗

## FIG. 11C

v_ch* ———→ (+ −) ———→ | PI | ———→ i_d*

↑

v_ch

*FIG. 12*

v_dc_u* ———→ (+ +) ———→ | 0.5 | ———→ (+ −) ———→ v_up*

↑                                    ↑

v_dc/2 ———→ | sign(v_u*) |          v_u*

v_dc_u* ———→ (+ −) ———→ | 0.5 | ———→ (+ +) ———→ v_un*

↑                                    ↑

v_dc/2 ———→ | sign(v_u*) |          v_u*

*FIG. 13*

**FIG. 14**

**FIG. 15**

car_up1*

v_up1*

SWITCH31

ON

SWITCH32

OFF

## *FIG. 16*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3188356 A1
- US 2015062991 A1
- US 2014092661 A1

- EP 2975749 A1
- JP 2010512134 A

**Non-patent literature cited in the description**

- *Institute of Electrical Engineers of Japan, Industry Applications Society Conference Program,* 2014, 1-155